# FASCICULE DE BREVET EUROPEEN

(11) **EP 1 236 056 B1**
(45) Date de publication et mention de la délivrance du brevet: **11.01.2006**
(21) Numéro de dépôt: 00985326.8
(22) Date de dépôt: 24.11.2000
(51) Int. Cl.: G01V 1/00, G01V 1/24

(54) **ENREGISTREUR DE DONNEES NUMERIQUES AUTONOME DU BRUIT DE FOND D'UN SITE**
AUTONOMES AUFNAHMEGERÄT SEISMISCHER DATEN DES GRUNDRAUSCHENS EINES ORTES
DIGITAL DATA RECORDER EXEMPT OF A SITE BACKGROUND NOISE

(30) Priorité: 26.11.1999 FR 9914943
(43) Date de publication de la demande: 04.09.2002
(73) Titulaire: Institut de Recherche pour le Développement ( IRD), 75010 Paris (FR)
(72) Inventeur: CHATELAIN, Jean-Luc, F-38000 Grenoble (FR); GUEGUEN, Philippe, F-38240 Meylan (FR); GUILLIER, Bertrand, F-61110 Dorceau (FR); BONDOUX, Francis, 06596 Quito (EC)
(74) Mandataire: Michelet, Alain
(86) Numéro de dépôt international: PCT/FR2000/003295
(87) Numéro de publication internationale: WO 2001/038901

(56) Documents cités:
- EP-A- 0 010 660
- EP-A- 0 717 387
- GB-A- 2 336 675
- US-A- 4 604 699
- US-A- 5 774 417

## Description

La présente invention concerne un enregistreur de données numériques autonome du bruit de fond d'un site. Elle a des applications en sismologie et plus particulièrement lors du microzonage d'un site consistant en l'étude des comportements des sols et/ou des constructions d'un site en fonction des vibrations auxquelles ils sont soumis.

L'étude du comportement d'un site, un sol ou une construction, soumis à des vibrations de faible amplitude est utile afin de pouvoir estimer le comportement dudit sol ou de la dite construction lors de sollicitations mécaniques diverses.

On connaît des techniques dans lesquelles les vibrations sont produites artificiellement par des engins générateurs pouvant être déplacés et pouvant appliquer des contraintes répétées sur le sol ou sur des éléments d'un bâtiment afin de les exciter. Des capteurs du type sismométrique sont placés en divers endroits du site et selon des axes particuliers. Les signaux générés par ces capteurs sont mesurés et analysés dans un équipement informatique. On peut par exemple, avec ce type de méthode, déduire la structure des terrains, détecter la fréquence de résonance d'une construction selon un axe particulier...

Il est apparu qu'il était possible de se passer de générateurs spécifiques de vibrations et d'utiliser la source de vibration naturelle sismique que représente les micro tremblements de terre dans les zones où ceux-ci sont fréquents. Cependant une telle technique, outre le fait qu'elle apparaît aléatoire car nécessitant d'attendre un tel tremblement, ne peut pas être utilisée dans des zones "calmes" sur le plan sismologique.

Le microzonage d'un site nécessite de recueillir et d'enregistrer les signaux des capteurs en divers points du site simultanément pendant plusieurs minutes puis de les analyser afin de tirer des conclusions. Ainsi, au cas où l'on utilise une excitation par micro tremblement, on doit disposer de plusieurs enregistreurs et des capteurs correspondants pour un temps plus ou moins aléatoire.

Une technique plus récente s'est développée dans laquelle l'excitation est produite par le bruit de fond d'origine naturelle ou artificielle du site. Ces sources naturelles sont par exemple, le tonnerre, des vagues... Les sources artificielles résultent des activités humaines et, par exemple, de la circulation automobile...

Dans le cas où le bruit de fond est utilisé pour exciter le site, la contrainte sur la simultanéité des recueils et enregistrement apparaît moins importante. Il est ainsi possible d'effectuer des recueils et enregistrements à divers endroits et moments distincts puis de les utiliser ultérieurement pour analyse. Il est ainsi possible avec un seul appareil d'effectuer rapidement le micro zonage d'un site.

Le traitement ultérieur des signaux générés par les capteurs tient compte de la particularité de l'excitation par le bruit de fond afin de produire des résultats exploitables. Il est ainsi, par exemple, possible de déterminer la fréquence propre d'un site grâce à cette technique de microzonage par bruit de fond.

Les dispositifs classiques d'enregistrements des signaux provenant des capteurs sismométriques tel que celui du brevet US-A-4,604,699 ne sont pas particulièrement adaptés à ces techniques de microzonage et ne permettent pas de bénéficier de tous les avantages de celles-ci. En particulier, ils nécessitent un réglage complexe de nombreux paramètres, la déconnexion des capteurs et/ou du sismomètre, de l'enregistreur après chaque enregistrement. Les enregistrements se déroulant habituellement sur de longues périodes, les données sont compressées. Ce sont également des équipements renforcés destinés à résister à des environnements pouvant être agressifs pendant de longues périodes. Ils ne sont pas non plus destinés à être fréquemment déplacés. Une station conçue pour l'enregistrement des séismes n'est donc pas adaptée et entraîne une perte de temps importante dans le cas d'une campagne de microzonage. De plus, les stations classiques conçues pour l'enregistrement des séismes du fait de leur complexité nécessitent une prise en charge par des équipes spécialisées ce qui limite également la possibilité d'effectuer de nombreuses mesures sur les différents points d'un site microzoné. Enfin, ces stations prévues pour enregistrer des séismes produisant donc des signaux de forte amplitude ne sont pas adaptées pour amplifier et enregistrer le bruit de fond.

Il est donc souhaitable de disposer d'un matériel spécifique adapté aux campagnes de microzonages. A cette fin, l'invention concerne un enregistreur de données numériques autonome du bruit de fond d'un site, ledit enregistreur recevant lesdites données de capteurs sismologiques, lesdits capteurs fournissant au moins un premier type de données H et un deuxième type de données V sous forme de signaux analogiques, ledit enregistreur comportant :
- une carte d'acquisition et de conversion analogique numérique selon une fréquence d'acquisition, ladite carte comportant au moins deux voies analogiques et une sortie numérique, chaque voie analogique comportant une entrée, un amplificateur de signaux analogiques à gain programmable et un filtre, ledit filtre comportant au moins une fonction passe bas, un multiplexeur analogique étant disposé entre les filtres et un convertisseur analogique numérique, chaque capteur étant relié à une voie spécifique.
- une interface utilisateur permettant la visualisation, l'audition et l'entrée d'informations;

Selon l'invention, l'enregistreur comporte en outre un dispositif de mémorisation amovible pour le stockage des données et une unité de pilotage comportant un programme de fonctionnement, ledit programme comportant un moyen permettant le paramétrage des conditions d'enregistrement, l'enregistrement et l'avertissement de la fin d'enregistrement, le paramétrage des conditions de fonctionnement par l'intermédiaire de l'interface utilisateur permettant au moins de sélectionner le gain, la fréquence d'acquisition et la durée de l'enregistrement.

Dans divers modes de mise en oeuvre de l'invention, les moyens suivants pouvant être utilisés seuls ou selon toutes leurs combinaisons techniquement possibles, sont mis en oeuvre:
- le dispositif de mémorisation est un module de mémoire flash;
- le dispositif de mémorisation est un disque dur;
- le dispositif de mémorisation est une disquette;
- la carte comporte en outre sur chaque voie, entre l'entrée et l'amplificateur, un filtre passe bande;
- la carte comporte en outre sur chaque entrée un réseau d'adaptation à l'impédance du capteur correspondant
- le réseau d'adaptation est amovible afin de permettre une adaptation manuelle lors d'un changement de capteur;
- le moyen permettant le paramétrage des conditions d'enregistrement permet en outre de sélectionner un nombre de cycles d'enregistrements supérieur ou égal à un et une valeur de pause supérieure ou égale à zéro, ladite valeur de pause correspondant à un intervalle de temps de pause entre deux enregistrements;
- le moyen permettant le paramétrage des conditions d'enregistrement comporte en outre un test de paramétrage afin de détecter et d'informer un utilisateur que les paramètres sélectionnés aboutissent à une saturation du dispositif de mémorisation;
- l'unité de pilotage est un module informatique du type compatible PC avec au moins une interface de type PCMCIA pour un module de mémoire flash de type PCMCIA;
- l'enregistreur comporte trois voies analogiques;
- le gain est programmable;
- le gain est programmable par pas de 6 dB entre 0 dB et 102 dB;
- l'enregistreur comporte un moyen informant l'utilisateur que la carte d'acquisition et de conversion est saturée;
- la fréquence d'acquisition est programmable;
- la fréquence d'acquisition est programmable entre 50 Hz et 250 Hz;

la résolution du convertisseur analogique numérique est programmable;
la résolution du convertisseur analogique numérique est comprise entre 8 et 32 bits;
la résolution du convertisseur analogique numérique est de 24 bits;
- l'interface utilisateur comporte pour l'entrée d'informations, 3 boutons poussoirs, le même bouton ayant des fonctions différentes en fonction d'un contexte visualisé;
- l'interface utilisateur comporte pour la visualisation un afficheur alphanumérique;
- l'interface utilisateur comporte pour la visualisation un afficheur alphanumérique à cristaux liquides;
- l'interface utilisateur comporte pour la visualisation, dans le cas où un préchauffage est prévu suite à la mise en marche de l'enregistreur, une diode électroluminescente de préchauffage activée pendant un temps prédéfini de stabilisation thermique;
- l'interface utilisateur comporte pour la visualisation une diode électroluminescente de saturation activée lorsqu'un signal sature la carte d'acquisition et de conversion;
- l'interface utilisateur comporte pour la visualisation, dans le cas où un moyen de courcircuitage des capteurs est disposé dans la carte d'acquisition et de conversion, une diode électroluminescente de décourcircuitage de capteur activée lorsque le signal provient des capteurs;
- l'interface utilisateur comporte pour la visualisation une diode électroluminescente activée lorsque l'enregistrement s'effectue;
- l'enregistreur comporte à titre d'interface utilisateur soit un afficheur alphanumérique, soit au moins une diode électroluminescente;
- l'interface utilisateur comporte pour l'audition, un générateur de sons, le générateur étant au moins activé lorsqu'un enregistrement ou un cycle d'enregistrement est terminé;
- dans le cas où un préchauffage est prévu, l'enregistreur comporte des moyens afin qu'un enregistrement ne puisse être réalisé qu'après le temps prédéfini de stabilisation thermique, des acquisitions sans enregistrement étant toutefois possibles avant la fin du temps prédéfini afin de déterminer pendant cette période les paramètres de fonctionnement.

L'enregistreur selon l'invention peut-être utilisé par un personnel non spécialisé, l'appareil étant d'un coup réduit et d'un maniement aisé. L'analyse des données est effectuée sur un équipement informatique externe, les données étant transmises, stockées, dans un dispositif de mémorisation qui, dans un mode de mise en oeuvre préféré, est un module de mémoire flash PMCIA.

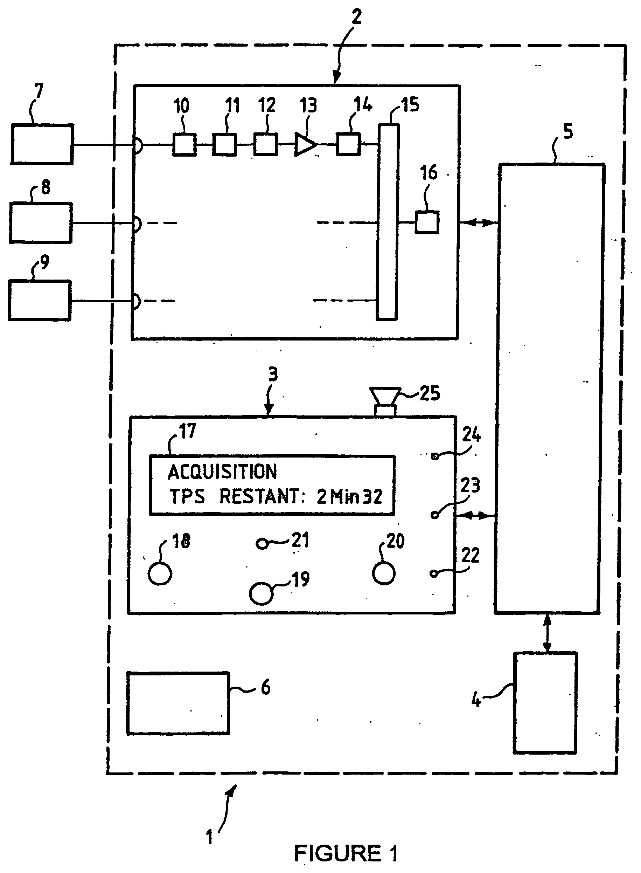

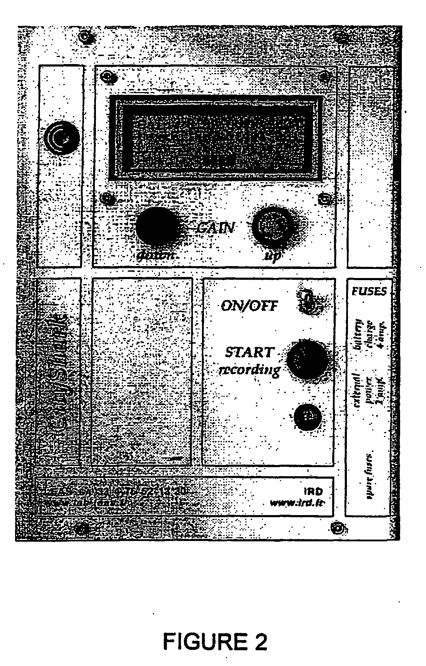

La présente invention sera mieux comprise à la lecture qui suit d'un exemple non limitatif de mise en oeuvre de l'invention où la figure 1 représente schématiquement un enregistreur, la figure 2 représente la face avant de l'enregistreur.

Sur la figure 1, l'enregistreur 1 comporte une carte d'acquisition et de conversion analogique numérique 2, une interface utilisateur 3, un module de mémoire flash amovible 4, une unité de pilotage 5 et une source d'alimentation 6 autonome. La source d'alimentation 6 autonome peut-être une pile ou une batterie rechargeable. Elle assure l'alimentation des différents éléments de l'enregistreur 1.

Dans cet exemple de réalisation, l'enregistreur 1 est relié à trois capteurs 7,8,9 sismologiques. Les dispositifs de liaison entre l'enregistreur et les capteurs sont des connecteurs multibroches permettant la connexion de capteurs passifs ou actifs. Pour ces derniers, des broches d'alimentation sont prévues dans les connecteurs.

Les signaux en provenance desdits capteurs sont reçus par la carte 2 et traités sur trois voies analogiques correspondantes.

Chaque voie analogique comporte un dispositif 10 destiné à permettre la mise en court-circuit de l'entrée correspondante, un réseau d'adaptateur d'impédance 11 permettant d'optimiser le transfert du signal entre le capteur et l'enregistreur. Dans un mode évolué de mise en oeuvre de l'invention, l'adaptateur d'impédance 11 sera un module amovible ou comportant des composants amovibles permettant une adaptation optimale d'impédance en cas de changement de type de capteur, le module ou le/les composants étant changés. II est également envisagé que certaines broches des connecteurs soient reliées à des réseaux d'adaptation d'impédance spécifiques permettant automatiquement l'adaptation en fonction du capteur, actif ou passif par exemple, par simple connexion utilisant des connecteurs terminaux spécifiques d'un type de capteur.

Dans une autre forme de mise en oeuvre de l'invention le dispositif de courcircuitage est omis. C'est en particulier le cas si l'on souhaite utiliser des capteurs actifs qui ne supportent pas le courcircuitage de leurs sorties. Ici également certaines broches des connecteurs pourront être reliées à un moyen de courcircuitage alors que d'autre ne le seront pas permettant ainsi d'utiliser indifféremment des capteurs passifs pouvant être courcircuités et des capteurs actifs ne devant pas l'être. Entre les deux types de capteurs les connexions au niveau de leurs connecteurs terminaux seront donc différentes.

Chaque voie comporte également un amplificateur 13 à gain programmable ainsi qu'un filtre passe bas 14. Le filtre 14 est destiné à éviter le phénomène de repliement spectral au cas où le signal analogique d'entrée comporterait des composantes fréquentielles supérieures ou égale à la moitié de la fréquence d'échantillonnage du convertisseur analogique numérique 16 disposé en sortie de la carte 2. Entre chacun des filtres 14 et le convertisseur analogique numérique 16 est disposé un multiplexeur 15 permettant de sélectionner la voie analogique à convertir.

L'interface 3 comporte un affichage alpha numérique 17 du type à cristaux liquides, des boutons poussoirs 18, 19 et 20 destinés à permettre l'entrée d'informations, des diodes électroluminescentes 21, 22, 23 et 24 destinées à l'affichage d'informations particulières et un générateur de son 25. L'entrée d'informations par l'intermédiaire de l'interface 3 est possible grâce à l'interaction de l'afficheur 17 et/ou des diodes électroluminescentes avec les boutons 18, 19 et 20. La fonction de chacun des boutons dépend d'informations affichées sur l'afficheur 17 et/ou par des diodes électroluminescentes. Dans une forme moins évoluée de l'invention, l'enregistreur comportera à type d'interface de visualisation seulement des diodes électroluminescentes au nombre d'au moins une et dans une autre forme seulement un afficheur alphanumérique.

L'interface permet par exemple de sélectionner le gain, les durées, répétitions d'enregistrement, la mise à l'heure d'une horloge, fréquence d'acquisition, d'arrêter l'acquisition en cours, voire d'autres paramètres de fonctionnement. Il est ainsi possible d'entrer un seuil d'échantillons saturés qui provoquera une alerte sonore en cas de dépassement.

L'unité 5 est préférentiellement un module informatique du type compatible PC comportant une interface PCMCIA pouvant accepter un module 4 de mémoire flash. L'unité 5 comporte une horloge sauvegardée pouvant être remise à l'heure et à jour par l'intermédiaire de l'interface 3. Des informations temporelles peuvent être utilisées lors de l'enregistrement des données dans le module flash.

Dans l'exemple de réalisation, le convertisseur analogique numérique 16 est un convertisseur 24, bits et de fréquence d'acquisition programmable entre 50 et 250 Hertz. Dans le cadre de l'invention il est envisagé un convertisseur de résolution moindre ou supérieure ainsi que d'autres fréquences d'échantillonnage.

Chacun des amplificateurs 13 est programmable, le gain pouvant être sélectionné entre 0 et 102 décibels, soit automatiquement par un moyen compris dans le programme de l'unité de pilotage, soit manuellement par l'intermédiaire de l'interface 3. Dans le cadre de l'invention il est envisagé d'autres valeurs de gain. La sélection automatique du gain s'effectue par des acquisitions sans enregistrement et par modification progressive, linéaire ou par sauts, du gain jusqu'à saturation, le gain sélectionné étant alors choisi en dessous du gain ayant provoqué la saturation. Dans un autre mode automatique, le gain sélectionné est calculé à partir d'acquisitions à un gain n'ayant pas provoqué de saturation.

Le programme de l'unité 5 comporte également des moyens permettant le préchauffage de l'enregistreur, l'enregistrement étant impossible pendant le temps de préchauffage. Il est cependant envisagé que pendant le temps de préchauffage il soit possible de sélectionner le gain des amplificateurs 16 des voix analogiques afin de déterminer plus rapidement quel gain peut être utilisé sans saturation excessive. Il est également envisagé dans le cadre de l'invention que l'enregistreur soit opérationnel dès sa mise en marche, c'est à dire que l'étape de préchauffage pour stabilisation thermique des circuits soit omise. Ceci peut être obtenu par utilisation de composants à faible dérive thermique et/ou par correction logicielle et/ou en considérant la dérive comme négligeable. Il est également envisagé que la carte d'acquisition et de conversion comporte un moyen d'autocalibrage, une source de tension de référence pouvant être injectée dans les circuits analogiques dans une phase de calibrage.

L'enregistreur réalisé comporte une alimentation par batteries d'environ 12 Volts avec possibilité de recharge externe, 3 voies analogiques à entrées différentielles, un convertisseur analogique numérique de 24 bits Delta Sigma. La résolution maximale peut cependant varier en fonction de la fréquence d'acquisition. La dynamique de l'enregistreur est de 108 dB à la fréquence d'acquisition de 100 Hz et de 90 dB à 250 Hz. La fréquence d'acquisition est programmable et peut, par exemple, être sélectionnée selon cinq valeurs: 50, 100, 125, 200, 250. Dans un autre mode de mise en oeuvre, la fréquence d'acquisition peut être choisie comme un multiple de la fréquence du réseau d'alimentation électrique alternatif du site afin d'augmenter la réjection de possibles bruits de réseau.

Le programme de fonctionnement permet de sélectionner la durée des enregistrements entre 1 minute et 60 minutes. A la fin de l'enregistrement un signal sonore est émis par l'interface utilisateur afin de permettre l'audition et informer l'utilisateur de la fin de l'enregistrement. Dans le mode de fonctionnement cyclique, la durée de pause entre deux enregistrements peut être sélectionnée entre 1 heure et 12 heures. Pendant l'enregistrement, le programme de fonctionnement peut afficher le temps restant, le niveau d'entrée et/ou la saturation et/ou le nombre de points correspondant à une saturation sous forme numérique et/ou graphique absolue ou en pourcentage. Le programme de fonctionnement comporte également des moyens de détection du niveau de l'alimentation électrique afin de prévenir l'utilisateur d'une baisse de niveau puis, si le niveau ne remonte pas et/ou continue à baisser, pour mettre en veille à faible consommation l'enregistreur voire l'arrêter totalement.

L'interface utilisateur comporte 3 boutons poussoirs 18, 19, 20 permettant d'entrer toutes les informations nécessaires au fonctionnement de l'enregistreur. La fonction de chacun des boutons est fonction d'un contexte affiché. Par exemple le bouton servant au démarrage d'une acquisition ou d'un cycle sert également à l'arrêter, si besoin est, par un appui prolongé.

Dans le cas d'une utilisation pour microzonage, les données brutes acquises sont stockées. Il n'est pas nécessaire de compresser les données comme dans le cas des stations sismologiques classiques pour lesquelles les enregistrements doivent être effectués sur de longues périodes. II est ainsi possible de stocker sur une carte à mémoire flash de 20 M octets environ 6 heures de données à 100 Hz. Le programme de fonctionnement peut également comporter des moyens permettant d'afficher le taux d'utilisation de la mémoire flash. Les données brutes sont stockées dans la carte flash dans un format de fichier compatible PC et de préférence en ASCII.

Sur la figure 2, la face avant de l'enregistreur a été représentée. Elle comporte des boutons poussoirs (« start recording » = démarrage enregistrement, « down » = diminution « up » = augmentation), un interrupteur de marche/arrêt (« on/off »), l'afficheur à cristaux liquides ainsi qu'un certain nombre d'informations commerciales (marques et/ou noms de société et/ou d'institutions) ou pratiques. En ce qui concerne ces dernières, une réserve de fusibles est disponible (« spare fuses », « Fuses »), de 2 Ampères pour l'alimentation externe (« external power 2 Amp. ») et de 4 ampères pour la charge de la batterie (« battery charge 4 Amp. »).

L'afficheur donne également les informations suivantes: le gain sélectionné (« gain »), le pourcentage de points d'acquisitions saturants «Ovf »), le nom du fichier suivant (« nextFil »), la durée et répétition (« Long », « Rep») et sous la forme d'affichage en barre ou « baragraphe » l'amplitude maximale des points acquis (« Amp Max »).

L'afficheur peut également afficher d'autres types d'information et, par exemple la fréquence d'acquisition, le nom du fichier en cours, le temps restant .... Le nom par défaut du fichier de stockage est de la forme mmddhhmm.nnn avec mm le mois, dd le jour, hh les heures, mm les minutes et nnn un index numérique compris entre 1 et 999.

L'enregistreur de bruit de fond d'un site est donc un appareil de maniement simple ne nécessitant pas de clavier pour l'entrée des données, trois boutons-poussoirs suffisant. Il permet un traitement immédiat des données stockées sur module 4 de mémoire flash par échange avec une seconde carte dans l'enregistreur. L'enregistreur n'a pas besoin de mettre en oeuvre des mémoires d'avant et/ou après événement.

## Revendications

1. Enregistreur (1) de données numériques autonome du bruit de fond d'un site, ledit enregistreur recevant lesdites données de capteurs (7, 8, 9) sismologiques, lesdits capteurs fournissant au moins un premier type de données H et un deuxième type de données V sous forme de signaux analogiques, ledit enregistreur comportant:
- une carte (2) d'acquisition et de conversion analogique numérique selon une fréquence d'acquisition, ladite carte comportant au moins deux voies analogiques et une sortie numérique, chaque voie analogique comportant une entrée, un amplificateur (13) de signaux analogiques à gain programmable et un filtre (14), ledit filtre comportant au moins une fonction passe bas, un multiplexeur (15) analogique étant disposé entre les filtres (14) et un convertisseur analogique numérique (16), chaque capteur étant relié à une voie spécifique;
- une interface (3) utilisateur permettant la visualisation (17, 21, 22, 23, 24), et l'entrée (18, 19, 20) d'informations,
- un dispositif de mémorisation (4) amovible pour le stockage des données,
- une unité (5) de pilotage comportant un programme de fonctionnement, ledit programme comportant un moyen permettant le paramétrage des conditions d'enregistrement, l'enregistrement et l'avertissement de la fin d'enregistrement, le paramétrage des conditions de fonctionnement par l'intermédiaire de l'interface utilisateur permettant au moins de sélectionner le gain, la fréquence d'acquisition et la durée de l'enregistrement, **caractérisé en ce que** la carte (2) comporte en outre sur chaque entrée un réseau (11) d'adaptation à l'impédance du capteur correspondant, ledit réseau étant amovible afin de permettre une adaptation manuelle lors d'un changement de capteur.

2. Enregistreur selon la revendication 1, **caractérisé en ce qu'**il comporte des dispositifs de liaison entre ledit enregistreur et les capteurs qui sont des connecteurs multibroches spécifiques d'un type de capteur pour l'adaptation d'impédance.

3. Enregistreur selon la revendication 1 ou 2, **caractérisé en ce que** la carte comporte en outre sur chaque voie, entre l'entrée et l'amplificateur, un filtre (12) passe bande.

4. Enregistreur selon l'une quelconque des revendications précédentes **caractérisé en ce que** le moyen permettant le paramétrage des conditions d'enregistrement permet en outre de sélectionner un nombre de cycles d'enregistrements supérieur ou égal à un et une valeur de pause supérieure ou égale à zéro, ladite valeur de pause correspondant à un intervalle de temps de pause entre deux enregistrements.

5. Enregistreur selon l'une quelconque des revendications précédentes **caractérisé en ce que** le moyen permettant le paramétrage des conditions d'enregistrement comporte en outre un test de paramétrage afin de détecter et d'informer, un utilisateur que les paramètres sélectionnées aboutissent à une saturation du dispositif de mémorisation.

6. Enregistreur selon l'une quelconque des revendications précédentes **caractérisé en ce que** l'unité de pilotage est un module informatique du type compatible PC avec au moins une interface de type PCMCIA pour un module de mémoire flash de type PCMCIA.

7. Enregistreur selon l'une quelconque des revendications précédentes **caractérisé en ce que** l'interface utilisateur comporte:
- pour la visualisation un afficheur alphanumérique;
- pour l'audition, un générateur de sons, le générateur étant au moins activé lorsqu'un enregistrement ou un cycle d'enregistrement est terminé;
- pour l'entrée d'informations, 3 boutons poussoirs, le même bouton ayant des fonctions différentes en fonction d'un contexte visualisé.

8. Enregistreur selon l'une quelconque des revendications précédentes, **caractérisé en ce qu'**il comporte un moyen informant l'utilisateur de la saturation de la carte d'acquisition, ledit moyen mettant en oeuvre un affichage de pourcentage de nombre de points d'acquisition en saturation.

9. Enregistreur selon la revendication 8, **caractérisé en ce qu'**il comporte un moyen permettant de provoquer une alerte sonore en cas de dépassement d'un seuil d'échantillons saturés, ledit seuil étant entré par l'interface utilisateur.

10. Enregistreur selon l'une quelconque des revendications 7 à 9, **caractérisé en ce que** l'interface utilisateur comporte pour la visualisation en outre au moins une diode électroluminescente.

## Patentansprüche

1. Autonomes Aufnahmegerät (1) für digitale Daten des Grundrauschens eines Ortes, wobei das Aufnahmegerät die Daten von seismologischen Fühlern (7, 8, 9) empfängt, wobei die Fühler mindestens einen ersten Datentyp H und einen zweiten Datentyp V in Form von Analogsignalen liefern, wobei das Aufnahmegerät umfasst:
- eine Karte (2) für die Erfassung und Analog-DigitalUmsetzung nach einer Erfassungsfrequenz, wobei die Karte mindestens zwei analoge Wege und einen digitalen Ausgang umfasst, wobei jeder analoge Weg einen Eingang, einen Verstärker (13) von Analogsignalen mit programmierbarer Verstärkung und einen Filter (14) umfasst, wobei der Filter mindestens eine Tiefpassfunktion umfasst, wobei ein Analog-Multiplexer (15) zwischen den Filtern (14) und einem Analog-Digital-Umsetzer (16) angeordnet ist, wobei jeder Fühler mit einem spezifischen Weg verbunden ist;
- eine Benutzerschnittstelle (3), die die Sichtbarmachung (17, 21, 22, 23, 24) und die Eingabe (18, 19, 20) von Informationen ermöglicht;
- eine abnehmbare Speichervorrichtung (4) für die Speicherung der Daten,
- eine Steuereinheit (5), umfassend ein Funktionsprogramm, wobei das Programm ein Mittel umfasst, das die Parametereinstellung der Aufzeichnungsbedingungen, die Aufzeichnung und Mitteilung über das Ende der Aufzeichnung ermöglicht, wobei die Parametereinstellung der Funktionsbedingungen mit Hilfe der Benutzerschnittstelle mindestens die Auswahl der Verstärkung, der Erfassungsfrequenz und der Aufzeichnungsdauer ermöglicht, **dadurch gekennzeichnet, dass** die Karte (2) ferner an jedem Eingang ein Netz (11) zur Anpassung an die Impedanz des entsprechenden Fühlers umfasst, wobei das Netz abnehmbar ist, um eine manuelle Anpassung bei einer Fühleränderung zu ermöglichen.

2. Aufnahmegerät nach Anspruch 1, **dadurch gekennzeichnet, dass** es Vorrichtungen zur Verbindung zwischen dem Aufnahmegerät und den Fühlern umfasst, die spezifische Mehrfachstecker eines Fühlertyps für die Impedanzanpassung sind.

3. Aufnahmegerät nach Anspruch 1 oder 2, **dadurch gekennzeichnet, dass** die Karte ferner auf jedem Weg zwischen dem Eingang und dem Verstärker einen Bandpassfilter (12) umfasst.

4. Aufnahmegerät nach einem der vorhergehenden Ansprüche, **dadurch gekennzeichnet, dass** das Mittel, das die Parametereinstellung der Aufzeichnungsbedingungen ermöglicht, ferner die Auswahl einer Anzahl von Aufzeichnungszyklen größer oder gleich Eins und eines Pausenwertes größer oder gleich Null ermöglicht, wobei der Pausenwert einem Pausenzeitintervall zwischen zwei Aufzeichnungen entspricht.

5. Aufnahmegerät nach einem der vorhergehenden Ansprüche, **dadurch gekennzeichnet, dass** das Mittel, das die Parametereinstellung der Aufzeichnungsbedingungen ermöglicht, ferner einen Test der Parametereinstellung umfasst, um zu erfassen und einen Benutzer zu informieren, dass die ausgewählten Parameter zu einer Sättigung der Speichervorrichtung führen.

6. Aufnahmegerät nach einem der vorhergehenden Ansprüche, **dadurch gekennzeichnet, dass** die Steuereinheit ein Informatikmodul vom PC-kompatiblen Typ mit mindestens einer Schnittstelle vom Typ PCMCIA für ein Flash-Speichermodul vom Typ PCMCIA ist.

7. Aufnahmegerät nach einem der vorhergehenden Ansprüche, **dadurch gekennzeichnet, dass** die Benutzerschnittstelle umfasst:
- für die Sichtbarmachung ein alphanumerisches Anzeigegerät;
- für das Abhören einen Tongenerator, wobei der Generator mindestens aktiviert wird, wenn eine Aufzeichnung oder ein Aufzeichnungszyklus beendet ist;
- für die Eingabe von Informationen 3 Druckknöpfe, wobei ein selber Knopf unterschiedliche Funktionen in Abhängigkeit von einem angezeigten Kontext hat.

8. Aufnahmegerät nach einem der vorhergehenden Ansprüche, **dadurch gekennzeichnet, dass** es ein Mittel umfasst, das den Benutzer über die Sättigung der Erfassungskarte informiert, wobei das Mittel eine Anzeige mit einem Prozentsatz einer Zahl von Erfassungspunkten bei Sättigung einleitet.

9. Aufnahmegerät nach Anspruch 8, **dadurch gekennzeichnet, dass** es ein Mittel umfasst, das es ermöglicht, einen Warnton im Falle einer Überschreitung einer Schwelle von gesättigten Mustern hervorzurufen, wobei die Schwelle über die Benutzerschnittstelle eingegeben wird.

10. Aufnahmegerät nach einem der Ansprüche 7 bis 9, **dadurch gekennzeichnet, dass** die Benutzerschnittstelle für die Sichtbarmachung ferner mindestens eine Leuchtdiode umfasst.

## Claims

1. Standalone digital data recorder (1) of a site background noise, said recorder receiving said data from seismological transducers (7, 8, 9), said transducers providing at least a first type of data H and a second type of data V in the form of analogue signals, said recorder comprising:
- an acquisition and analogue/digital conversion card (2) according to an acquisition rate, said card comprising at least two analogue channels and a digital output, each analogue channel comprising an input, a programmable gain analogue signal amplifier (13) and a filter (14), said filter comprising at least one low-pass function, an analogue multiplexer (15) being provided between the filters (14) and an analogue/digital converter (16), each transducer being connected to a specific channel;
- a user interface (3) enabling visualisation (17, 21, 22, 23, 24), and input (18, 19, 20) of information:
- a removable storage device (4) for storing the data,
a drive unit (5) comprising an operating programme, said programme comprising a means enabling to set up the recording conditions, the recording and the warning of the end of the recording session, to set up the operating conditions by means of the user interface enabling at least to select the gain, the acquisition rate and the duration of the recording, **characterised in that** the card (2) comprises moreover on each input an array (11) for matching the impedance of the corresponding transducer, said array being removable in order to enable manual matching for each new transducer.

2. A recorder according to claim 1, **characterised in that** it comprises linking means between said recorder and the transducers which are specific multipin connectors of a transducer for the impedance matching.

3. A recorder according to claim 1 or 2 **characterised in that** the card comprises moreover on each channel, between the input and the amplifier, a pass-band filter (12).

4. A recorder according to any one of the previous claims, **characterised in that** the means enabling to set up the recording conditions enables moreover to select a number of recording cycles greater than or equal to one and a pause value greater than or equal to zero, said pause value corresponding to a pause time interval between two recordings.

5. A recorder according to any one of the previous claims, **characterised in that** the means enabling to set up the recording conditions comprises moreover a set-up test in order to detect and inform a user that the selected parameters cause saturation of the storage device.

6. A recorder according to any one of the previous claims, **characterised in that** the drive unit is a PC compatible data processing module with at least one PCMCIA interface for a PCMCIA flash memory module.

7. A recorder according to any one of the previous claims, **characterised in that** the user interface comprises:
- for visualisation an alphanumerical display unit;
- for listening, a sound generator, the generator being at least actuated upon completion of a recording or a recording cycle;
- for inputting information, 3 pushbuttons, the same button having different functions in relation to a visualised context.

8. A recorder according to any one of the previous claims, **characterised in that** it comprises a means indicating the acquisition card saturation, said means providing saturation acquisition point number percentage display.

9. A recorder according to claim 8, **characterised in that** it comprises a means enabling to provide a sound warning when exceeding a saturated sample threshold, said treshold being imputed by the user interface.

10. A recorder according to claims 7 to 9, **characterised in that** the user interface comprises for visualisation moreover at least one light-emitting diode.
